# FASCICULE DE BREVET EUROPEEN

(11) **EP 1 439 990 B1**
(45) Date de publication et mention de la délivrance du brevet: **11.05.2011**
(21) Numéro de dépôt: 02795308.2
(22) Date de dépôt: 11.10.2002
(51) Int. Cl.: B60T 11/04

(54) **DISPOSITIF DE COMMANDE DE FREIN DE STATIONNEMENT**
BETÄTIGUNGSVORRICHTUNG FÜR EINE FESTSTELLBREMSE
PARKING BRAKE CONTROL DEVICE

(30) Priorité: 17.10.2001 FR 0113547
(43) Date de publication de la demande: 28.07.2004
(73) Titulaire: ROBERT BOSCH GMBH, 70442 Stuttgart (DE)
(72) Inventeur: BEJOT, Philippe, F-75008 PARIS (FR)
(74) Mandataire: Hurwic, Aleksander Wiktor
(86) Numéro de dépôt international: PCT/FR2002/003493
(87) Numéro de publication internationale: WO 2003/033322

(56) Documents cités:
- EP-A- 0 299 929
- EP-A- 0 599 238
- EP-A- 0 972 690
- DE-A- 1 555 185
- DE-A- 3 235 367
- DE-A- 3 514 602
- GB-A- 2 087 491
- US-A- 4 385 754

## Description

La présente invention concerne un dispositif de commande d'un frein de stationnement et un système de frein de stationnement muni de ce dispositif.

On connaît déjà dans l'état de la technique un dispositif de commande d'un frein de stationnement de véhicule du type comprenant un câble destiné à relier un levier de manoeuvre à un frein à disque. GB 2 087 491 **et** DE 15 55 185 **décrivent l'incorporation d'un moyen élastique dans le câble de frein à main**.

Le frein à disque comprend généralement une partie mobile comportant le disque, entraîné par la roue, et une partie fixe comportant un étrier portant des plaquettes, munies de garnitures de friction, destinées à être serrées contre le disque. Le serrage des plaquettes peut être commandé, d'une part, par un dispositif hydraulique assurant le freinage du véhicule en mouvement, et d'autre part, par un dispositif mécanique assurant l'immobilisation du véhicule en stationnement. Ce dispositif de commande mécanique comprend le câble reliant le levier de manoeuvre (actionné généralement manuellement) et le frein à disque.

Dans certains cas, le conducteur souhaitant immobiliser le véhicule actionne le levier de manoeuvre en appliquant une force de serrage du disque juste suffisante pour l'immobilisation immédiate du véhicule. Or, il est possible qu'au moment de son serrage, le disque soit chaud. En se refroidissant, le disque ainsi que les garnitures de plaquettes se contractent axialement au risque que le frein se desserre si sa force de serrage initiale n'est pas suffisante pour compenser les contractions du disque et des garnitures.

L'invention a pour but d'éviter un desserrage inopiné d'un frein de stationnement du type à disque du fait notamment du refroidissement de ce disque et des garnitures de friction après serrage du frein.

A cet effet, l'invention a pour objet un dispositif de commande d'un frein de stationnement de véhicule du type précité, caractérisé en ce qu'il comprend des moyens d'accumulation d'énergie mécanique, distincts du câble, reliant des brins proximal et distal du câble.

Suivant d'autres caractéristiques de ce dispositif:
- les moyens d'accumulation d'énergie comprennent un ressort relié aux brins proximal et distal du câble de façon à être déformable élastiquement, par écartement relatif des deux brins, entre une position de repos, vers laquelle il est rappelé élastiquement, et une position d'accumulation d'énergie;
- le ressort est précontraint en position de repos;
- le ressort est accroché entre des premier et second organes de liaison, solidaires respectivement des brins proximal et distal, le dispositif comprenant des moyens de limitation de la course relative des organes de liaison lorsque le ressort se déforme entre ses positions de repos et d'accumulation d'énergie ;

- la course relative des deux organes de liaison lorsque le ressort (34) se déforme entre ses positions de repos et d'accumulation d'énergie est d'au moins 2 mm, par exemple comprise entre 2 et 6 mm ;
- le premier organe de liaison forme un boîtier de logement du ressort et du second organe de liaison ;
- le ressort est de compression et comprend deux extrémités en appui respectivement sur deux sièges reliées respectivement aux brins proximal et distal du câble ;
- le second organe de liaison comporte des première et seconde extrémités destinées à coopérer avec des première et seconde butées ménagées sur le premier organe de liaison, pour, respectivement, limiter la course relative des organes de liaison lorsque le ressort se déforme entre ses positions de repos et d'accumulation d'énergie et pré-contraindre le ressort en position de repos ;
- la première butée de fin de course est formée par un siège d'appui du ressort, ce siège étant passant pour un brin du câble.

L'invention a également pour objet un système de frein de stationnement de véhicule du type comprenant un ensemble d'au moins un frein à disque, caractérisé en ce qu'il comprend un dispositif de commande d'un frein à disque tel que défini ci-dessus.

Suivant une autre caractéristique de ce système, la raideur du ressort d'accumulation d'énergie est inférieure à la raideur totale de l'ensemble comprenant au moins un frein à disque.

L'invention sera mieux comprise à la lecture de la description qui va suivre, donnée uniquement à titre d'exemple et faite en se référant aux dessins dans lesquels:
- la figure 1 est une vue schématique d'un système de frein de stationnement de véhicule selon l'invention ;
- les figures 2 et 3 sont des vues schématiques d'un dispositif de commande d'un frein de stationnement du système illustré sur la figure 1, ce dispositif de commande étant représenté dans des configurations de repos et d'accumulation d'énergie respectivement ;
- la figure 4 est un graphique représentant la course du brin proximal du câble en fonction de la force de tension appliquée à ce câble.

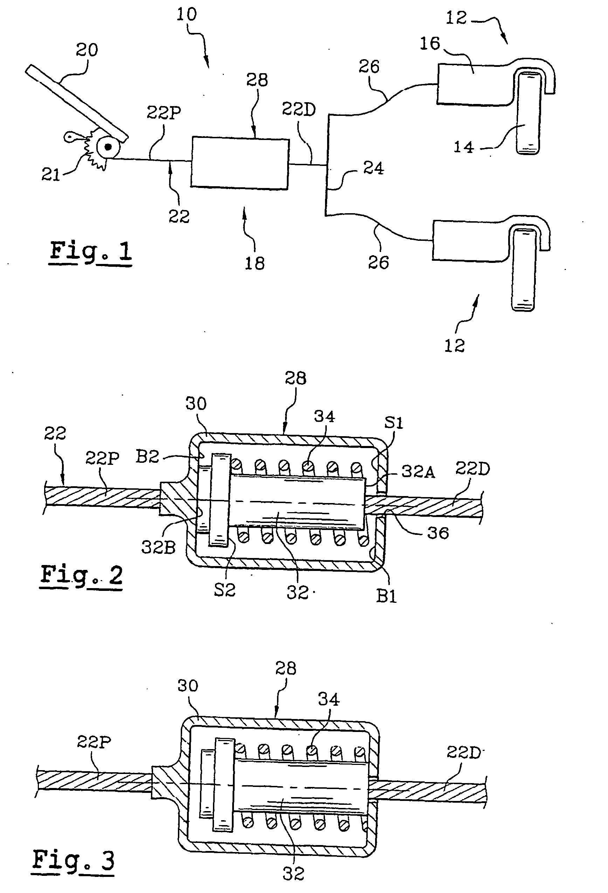

On a représenté sur la figure 1 un système de frein de stationnement pour véhicule, notamment automobile, selon l'invention, désigné par la référence générale 10.

Cet système 10 comprend au moins un frein à disque 12, par exemple deux freins à disque 12, comme cela est illustré sur la figure 1.

Chaque frein 12 comprend une partie mobile comportant un disque 14, entraîné par une roue du véhicule, et une partie fixe comportant un étrier 16. Cet étrier 16 est destiné à porter des plaquettes classiques, munies de garnitures de friction, destinées à être serrées contre le disque 14.

De façon classique, le serrage des plaquettes peut être commandé, d'une part, par un dispositif hydraulique (non représenté) assurant le freinage du véhicule en mouvement, et d'autre part, par un dispositif mécanique 18 assurant l'immobilisation du véhicule en stationnement.

Le système 10 comprend également un levier de manoeuvre classique 20 relié aux deux freins 12 par le dispositif de commande 18 et des moyens 21 de blocage du levier 20 de type à rochet.

Dans ce qui suit, un élément sera dit proximal lorsqu'il est proche du levier de manoeuvre 20. Par contre, un élément sera dit distal lorsqu'il est éloigné du levier de manoeuvre 20.

Le dispositif de commande 18 comprend un câble primaire 22 relié, par un organe de couplage classique, tel qu'un palonnier 24, à deux câbles secondaires 26. Ces câbles primaire 22 et secondaires 26 sont classiques.

L'extrémité proximale du câble primaire 22 est reliée de façon connue en soi au levier de manoeuvre 20. L'extrémité distale de chaque câble secondaire 26 est reliée de façon connue en soi à un frein 12 correspondant.

Le dispositif de commande 18 comprend des moyens 28 d'accumulation d'énergie mécanique, distincts des câbles 22, 26, reliant, dans l'exemple décrit, des brins proximal 22P et distal 22D du câble primaire.

Un exemple de réalisation des moyens d'accumulation d'énergie 28 est illustré sur les figures 2 et 3.

Sur ces figures, on voit que les moyens 28 d'accumulation d'énergie comprennent des premier 30 et second 32 organes de liaison, solidaires respectivement des brins proximal 22P et distal 22D du câble primaire. Le premier organe de liaison 30 forme un boîtier de logement du second organe de liaison 32.

Les moyens 28 d'accumulation d'énergie comprennent également un ressort 34 relié aux organes de liaison 30, 32 de façon à être déformable élastiquement, par écartement relatif des deux brins proximal 22P et distal 22D du câble primaire, entre une position de repos, telle que représentée sur la figure 2, et une position d'accumulation d'énergie, telle que représentée sur la figure 3.

Le ressort 32 est rappelé élastiquement vers sa position de repos dans laquelle il est précontraint.

Dans l'exemple illustré, le ressort 34 est un ressort de compression et comprend deux extrémités en appui respectivement sur deux sièges S1, S2 ménagés sur les organes de liaison 30, 32.

Le second organe de liaison 32, de forme générale cylindrique, est entouré par le ressort 34. Ce second organe de liaison 32 comporte des première 32A et seconde 32B extrémités destinées à coopérer avec des première B1 et seconde B2 butées ménagées sur le premier organe de liaison 30. La première butée B1, formée par le siège S1 d'appui du ressort, est destinée à coopérer avec la première extrémité 32A du second organe de liaison 32 pour limiter la course relative des deux organes de liaison 30, 32 lorsque le ressort 34 se déforme entre ses positions de repos (figure 2) et d'accumulation d'énergie (figure 3). La seconde butée B2 est destinée à coopérer avec la seconde extrémité 32B du second organe de liaison 32 de façon à pré-contraindre le ressort 34 en position de repos.

La course relative des deux organes de liaison 30, 32 lorsque le ressort 34 se déforme entre ses positions de repos et d'accumulation d'énergie est de préférence d'au moins 2 mm, par exemple comprise entre 2 et 6 mm.

On notera que le siège S1 d'appui du ressort 34 est muni d'un orifice 36 de façon à être passant pour le brin distal 22D du câble primaire.

Lorsque le dispositif de commande 18 sollicite un frein 12 dans une configuration de serrage, les différents organes de la partie fixe du frein 12, notamment l'étrier 16, se déforment élastiquement. Ainsi, un frein est classiquement caractérisé par une raideur globale représentative de la déformation de la partie fixe du frein lors du serrage de ce dernier. Cette raideur globale est appelée habituellement « raideur du frein ».

Conformément à l'invention, la raideur du ressort 34 de l'accumulateur d'énergie 28 est inférieure à la raideur totale de l'ensemble constitué par les deux freins 12 reliés en parallèle au brin distal 22D du câble primaire (les raideurs des deux freins montés en parallèle s'ajoutent).

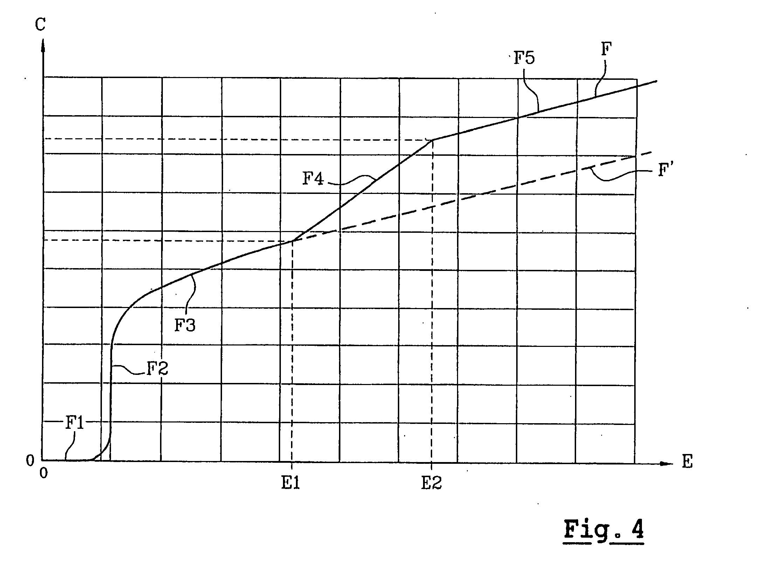

Sur la figure 4, on a représenté la courbe F d'évolution de la course C d'une extrémité mobile du câble primaire 22 (ordonnées) en fonction de l'effort E appliqué par un conducteur sur ce câble 22 par l'intermédiaire du levier de manoeuvre 20 (abscisses).

On notera que lorsque le levier de manoeuvre 20 est actionné pour serrer le frein de stationnement, l'extrémité mobile du câble primaire 22 est son extrémité proximale, celle-ci étant en effet reliée au levier de manoeuvre 20 et entraînée par ce dernier. Par contre, après serrage du frein de stationnement, le levier de manoeuvre 20 est immobilisé si bien que l'extrémité mobile du câble primaire 22 est son extrémité distale (reliée au palonnier 24), celle-ci étant susceptible de se déplacer sous l'effet du refroidissement du disque des freins 12 et des garnitures de leurs plaquettes.

En considérant la courbe F dans le sens d'un effort croissant appliqué sur le levier de manoeuvre 20, on voit que, comme il est habituel, cette courbe F présente trois parties successives F1 à F3.

La première partie F1 de la courbe, sensiblement horizontale, correspond aux différents efforts (frottement, etc.) que le conducteur doit vaincre avant d'obtenir un déplacement de l'extrémité proximale du câble primaire 22.

La deuxième partie F2 de la courbe, sensiblement verticale, correspond au rattrapage de différents jeux mécaniques dans le dispositif de commande 18.

La troisième partie F3 de la courbe a une forme générale inclinée suivant une pente imposée par la raideur de l'ensemble constitué par les deux freins 12.

Cette partie F3 est prolongée par une quatrième partie F4 de la courbe de forme générale inclinée suivant une pente imposée par la raideur de l'accumulateur d'énergie 28. La pente de cette quatrième partie F4 est supérieure à la pente de la troisième partie F3 car la raideur du ressort 34 est inférieure à la raideur de l'ensemble constitué par les deux freins 12.

On notera que la quatrième partie F4 de la courbe s'étend entre deux valeurs E1, E2 de l'effort à appliquer sur le levier de manoeuvre. La première valeur d'effort E1 correspond sensiblement à la précontrainte du ressort 34. La seconde valeur d'effort E2 correspond sensiblement à l'effort nécessaire pour déplacer le ressort 34 dans sa configuration d'accumulation d'énergie telle qu'illustrée sur la figure 3.

La partie F4 est prolongée par une cinquième partie F5 de la courbe, de pente plus faible que celle de la quatrième partie F4 imposée par la raideur de l'ensemble constitué par les deux freins 12.

Sur la figure 4, on a représenté en traits interrompus la partie F de la courbe que l'on obtiendrait en l'absence des moyens d'accumulation d'énergie 28. On notera que la cinquième partie F5 de la courbe est sensiblement parallèle à la partie F' en traits interrompus.

De façon classique, on observe que lorsque le véhicule est en stationnement sur un emplacement relativement horizontal, le conducteur actionne le levier de manoeuvre 20 en lui faisant parcourir une course normale. Par contre, lorsque le véhicule est en stationnement sur un emplacement relativement incliné, le conducteur actionne le levier de manoeuvre 20 en lui faisant parcourir une course supérieure à la normale, de façon à serrer davantage le frein de stationnement pour éviter tout déplacement inopiné du véhicule.

Dans le cas de l'invention, l'homme du métier saura choisir les valeurs des points E1 et E2 de façon à faire correspondre la quatrième partie F4 de la courbe avec l'intervalle habituel de position dans lequel le conducteur a tendance à placer le levier de manoeuvre 20 suivant une course normale correspondant à un emplacement de stationnement relativement horizontal.

Grâce à l'invention, un point situé sur la quatrième partie F4 de la courbe correspond à une force de serrage des disques 14 des freins 12 juste suffisante pour l'immobilisation immédiate du véhicule sur un emplacement relativement horizontal.

Si le serrage du frein de stationnement a eu lieu alors que les disques 14 étaient chauds, lors du refroidissement de ces derniers, l'effort de serrage des freins 12 est maintenu constant grâce au ressort 34 des moyens d'accumulation d'énergie 28. En effet, les contractions axiales des disques 14 et des garnitures des plaquettes, lors du refroidissement des freins, provoquent un déplacement des câbles secondaires 26 qui est répercuté au brin distal 22D du câble primaire. Le déplacement du brin distal 22D du câble primaire est compensé par le ressort 34, ce dernier restituant un effort et réduisant la variation de serrage des freins 12, bien que le câble primaire 22 se raccourcisse globalement.

Le serrage des freins 12 étant maintenu malgré le refroidissement des disques 14, le risque de desserrage inopiné des freins est évité.

L'invention ne se limite pas au mode de réalisation décrit précédemment.

En particulier, les moyens d'accumulation d'énergie mécanique 28 peuvent être agencés sur chacun des câbles secondaires 26 plutôt que sur le câble primaire 22.

Par ailleurs, les moyens d'accumulation d'énergie 28 peuvent être équipés d'un ressort de type varié, notamment à compression, comme dans l'exemple décrit, à traction ou à effet angulaire. La forme du ressort peut être variée, par exemple hélicoïdale simple ou multiple, conique simple ou double, en forme de tonneau, de lame ou encore d'anneau.

Enfin, bien que dans l'exemple illustré, le dispositif de commande 18 agisse sur deux freins à disque, l'invention peut être appliquée à la commande d'un seul frein à disque ou de plus de deux freins à disque, par exemple quatre.

Parmi les avantages de l'invention, on notera que celle-ci permet d'éviter un desserrage inopiné d'un frein de stationnement du type à disque, notamment lors du refroidissement de ce disque après serrage du frein.

L'accroissement de la course de manoeuvre du levier 20, pour permettre le déplacement du ressort 34 entre ses positions de repos et d'accumulation d'énergie, est limité et prédéterminé.

La course relative des deux organes de liaison 30, 32 étant limitée, on évite ainsi le risque de compression excessive du ressort 34, ce dernier étant avantageusement protégé par un organe de liaison formant boîtier 30.

## Revendications

1. Dispositif de commande d'un frein de stationnement de véhicule du type comprenant un câble (22) destiné à relier un levier de manoeuvre (20) à un frein à disque (12), des moyens d'accumulation d'énergie mécanique (28) distincts du câble (22), reliant des brins proximal (22P) et distal (22D) du câble, lesdits moyens d'accumulation comprenant un ressort (34) relié aux brins proximal (22P) et distal (22D) du câble de façon à être déformable élastiquement, par écartement relatif des deux brins, entre une position de repos, vers laquelle il est rappelé élastiquement, et une position d'accumulation d'énergie, **caractérisé en ce que** la raideur du ressort (34) de l'accumulateur d'énergie (28) est inférieure à la raideur totale de l'ensemble constitué par les deux freins (12) reliés en parallèle au brin distal (22D) du câble primaire.

2. Dispositif selon la revendication 1, **caractérisé en ce que** le ressort (34) est précontraint en position de repos.

3. Dispositif selon revendication 1 ou 2, **caractérisé en ce que** le ressort est accroché entre des premier et second organes de liaison (30, 32), solidaires respectivement des brins proximal (22P) et distal (22D), le dispositif comprenant des moyens (32A, B1) de limitation de la course relative des organes de liaison (30, 32) lorsque le ressort (34) se déforme entre ses positions de repos et d'accumulation d'énergie.

4. Dispositif selon la revendication 3, **caractérisé en ce que** la course relative des deux organes de liaison (30, 32) lorsque le ressort (34) se déforme entre ses positions de repos et d'accumulation d'énergie est d'au moins 2 mm.

5. Dispositif selon la revendication 3, **caractérisé en ce que** la course relative des deux organes de liaison (30, 32) lorsque le ressort (34) se déforme entre ses positions de repos et d'accumulation d'énergie est comprise entre 2 et 6 mm.

6. Dispositif selon la revendication 3, 4 ou 5, **caractérisé en ce que** le premier organe de liaison (30) forme un boîtier de logement du ressort (34) et du second organe de liaison (32).

7. Dispositif selon l'une quelconque des revendications 2 à 6, **caractérisé en ce que** le ressort (34) est de compression et comprend deux extrémités en appui respectivement sur deux sièges (S1, S2) reliées respectivement aux brins proximal (22P) et distal (22D) du câble.

8. Dispositif selon les revendications 6 et 7 prises ensemble, **caractérisé en ce que** le second organe de liaison (32) comporte des première et seconde extrémités (32A, 32B) destinées à coopérer avec des première (B1) et seconde (B2) butées ménagées sur le premier organe de liaison (30), pour, respectivement, limiter la course relative des organes de liaison (30, 32) lorsque le ressort (34) se déforme entre ses positions de repos et d'accumulation d'énergie et pré-contraindre le ressort (34) en position de repos.

9. Dispositif selon la revendication 8, **caractérisé en ce que** la première butée de fin de course (B1) est formée par un siège (S1) d'appui du ressort, ce siège étant passant pour un brin (22D) du câble.

10. Système de frein de stationnement de véhicule du type comprenant un ensemble d'au moins un frein à disque (12), **caractérisé en ce qu'**il comprend un dispositif (18) de commande d'un frein à disque selon l'une quelconque des revendications précédentes.

11. Système selon la revendication 10 comprenant un dispositif de commande (18) selon l'une quelconque des revendications 1 à 9, **caractérisé en ce que** la raideur du ressort d'accumulation d'énergie (34) est inférieure à la raideur totale de l'ensemble comprenant au moins un frein à disque (12).

## Claims

1. Control device intended for a parking brake of a vehicle, of the type comprising a cable (22) connecting an operating lever (20) to a disc brake (12), mechanical-energy accumulation means (28), which are separate from the cable (22) and which connect a proximal strand (22P) to a distal strand (22D) of the cable, said mechanical-energy accumulation means comprising a spring (34), which is connected with the proximal strand (22P) and with the distal strand (22D) of the cable so as to be elastically deformable when these strands move relative to each other, between a rest position, towards which it is resiliently biased, and a position in which it accumulates energy, **characterised in that** the stiffness of the spring (34) of the energy-accumulation means (28) is lower than the total stiffness of the assembly consisting of the two brakes (12), which are parallel-connected to the distal strand (22D) of the primary cable.

2. Device according to claim 1, **characterised in that** the spring (34) is prestressed to its rest position.

3. Device according to claim 1 or 2, **characterised in that** the spring is hooked between first and second connecting members (30, 32), which are rigidly linked with the proximal strand (22P) and the distal strand (22D) respectively, the device comprising limiting means (32A, B1) for the relative travel of the connecting members (30, 32) when the spring (34) becomes deformed between its rest position and its mechanical-energy accumulation position.

4. Device according to claim 3, **characterised in that**, when the spring (34) becomes deformed between its rest position and its mechanical-energy accumulation position, the relative travel of the connecting members (30, 32) amounts at least to 2 mm.

5. Device according to claim 3, **characterised in that**, when the spring (34) becomes deformed between its rest position and its mechanical-energy accumulation position, the relative travel of the connecting members (30, 32) ranges from 2 to 6 mm.

6. Device according to claim 3, 4 or 5, **characterised in that** the first connecting member (30) constitutes a housing, accommodating the spring (34) and the second connecting member (32).

7. Device according to any one of claims 2 to 6, **characterised in that** the spring (34) is a compression one, and **in that** it comprises two ends, resting on two seats (S1, S2) respectively, and connected with the proximal strand (22P) and with the distal strand (22D) of the cable, respectively.

8. Device according to claims 6 and 7 as considered together, **characterised in that** the second connecting member (32) comprises a first end (32A) and a second end (32B), which are intended to cooperate with a first stop (B1) and a second stop (B2), provided on the first connecting member (30), on the one hand, so as to limit the relative travel of the connecting members (30, 32) when the spring (34) becomes deformed between its rest position and its mechanical-energy accumulation position and, on the other hand, in order to prestress the spring (34) to its rest position.

9. Device according to claim 8, **characterised in that** the first end-of-travel stop (B1) consists of a bearing seat (S1) for the spring, such seat letting through a strand (22D) of the cable.

10. Parking-brake system for a vehicle, of the type comprising an assembly consisting of at least one disc brake (12), **characterised in that** it comprises a control device (18) for a disc brake according to any one of the preceding claims.

11. System according to claim 10, comprising a control device (18) according to any one of claims 1 to 9, **characterised in that** the stiffness of the mechanical-energy accumulation spring (34) is lower than the total stiffness of the assembly comprising at least one disc brake (12).

## Patentansprüche

1. Vorrichtung zum Betätigen einer Feststellbremse eines Fahrzeugs, vom Typ mit einem Seilzug (22), der dazu dient, einen Betätigungshebel (20) mit einer Scheibenbremse (12) zu verbinden, wobei vom Seilzug (22) getrennte Mittel zum Speichern von mechanischer Energie (28) einen proximalen Strang (22P) und einen distalen Strang (22D) des Seilzugs verbinden, wobei die Speichermittel eine Feder (34) aufweisen, die jeweils mit dem proximalen Strang (22P) und distalen Strang (22D) des Seilzugs so verbunden ist, dass dieser durch relative Spreizung der beiden Stränge zwischen einer Ruhestellung, zu der die Feder elastisch zurückgestellt ist, und einer Energiespeicherungsstellung elastisch verformbar ist, **dadurch gekennzeichnet, dass** die Steifigkeit der Feder (34) des Energiespeichers (28) kleiner ist als die Gesamtsteifigkeit der Baugruppe aus den beiden mit dem distalen Strang (22D) des primären Seilzugs parallel verbundenen Bremsen (12).

2. Vorrichtung nach Anspruch 1, **dadurch gekennzeichnet, dass** die Feder (34) in der Ruhestellung vorgespannt ist.

3. Vorrichtung nach Anspruch 1 oder 2, **dadurch gekennzeichnet, dass** die Feder zwischen einem ersten und zweiten Verbindungsorgan (30, 32) eingehängt ist, die mit dem proximalen Strang (22P) bzw. distalen Strang (22D) fest verbunden sind, wobei die Vorrichtung Mittel (32A, B1) zum Begrenzen des relativen Wegs der Verbindungsorgane (30, 32) aufweist, wenn die Feder (34) sich zwischen ihrer Ruhestellung und Energiespeicherungsstellung verformt.

4. Vorrichtung nach Anspruch 3, **dadurch gekennzeichnet, dass** der relative Weg der beiden Verbindungsorgane (30, 32) mindestens 2 mm beträgt, wenn die Feder (34) sich zwischen ihrer Ruhestellung und ihrer Energiespeicherungsstellung verformt.

5. Vorrichtung nach Anspruch 3, **dadurch gekennzeichnet, dass** der relative Weg der beiden Verbindungsorgane (30, 32) zwischen 2 und 6 mm beträgt, wenn die Feder (34) sich zwischen ihrer Ruhestellung und ihrer Energiespeicherungsstellung verformt.

6. Vorrichtung nach Anspruch 3, 4 oder 5, **dadurch gekennzeichnet, dass** das erste Verbindungsorgan (30) ein Gehäuse zur Aufnahme der Feder (34) und des zweiten Verbindungsorgans (32) bildet.

7. Vorrichtung nach einem der Ansprüche 2 bis 6, **dadurch gekennzeichnet, dass** die Feder (34) eine Druckfeder ist und zwei Enden aufweist, die sich jeweils an zwei Sitzen (S1, S2) abstützen, die am proximalen Strang (22P) bzw. distalen Strang (22D) des Seilzugs verbunden sind.

8. Vorrichtung nach den gemeinsamen betrachteten Ansprüchen 6 und 7, **dadurch gekennzeichnet, dass** das zweite Verbindungsorgan (32) ein erstes und zweites Ende (32A, 32B) aufweist, die mit einem ersten Anschlag (B1) bzw. zweiten Anschlag (B2) zusammenwirken, die am ersten Verbindungsorgan (30) angebracht sind, um den relativen Weg der Verbindungsorgane (30, 32) zu begrenzen, wenn die Feder (34) sich zwischen ihrer Ruhestellung und ihrer Energiespeicherungsstellung verformt, und die Feder (34) in der Ruhestellung vorzuspannen.

9. Vorrichtung nach Anspruch 8, **dadurch gekennzeichnet, dass** der erste Endstellungsanschlag (B1) durch einen Sattel (S1) zum Stützen der Feder gebildet ist, wobei ein Strang (22D) des Seilzugs durch diesen Sattel hindurchgeht.

10. Feststellbremssystem eines Fahrzeugs, vom Typ mit einer Baugruppe mit mindestens einer Scheibenbremse (12), **dadurch gekennzeichnet, dass** es eine Vorrichtung (18) zum Betätigen einer Scheibenbremse nach einem der vorhergehenden Ansprüche aufweist.

11. System nach Anspruch 10 mit einer Steuerungsvorrichtung (18) nach einem der Ansprüche 1 bis 9, **dadurch gekennzeichnet, dass** die Steifigkeit der Energiespeicherungsfeder (34) kleiner ist als die Gesamtsteifigkeit der Baugruppe mit mindestens einer Scheibenbremse (12) ist.
